# EUROPÄISCHE PATENTSCHRIFT

(11) **EP 1 171 793 B1**
(45) Veröffentlichungstag und Bekanntmachung des Hinweises auf die Patenterteilung: **09.10.2002**
(21) Anmeldenummer: 00925142.2
(22) Anmeldetag: 30.03.2000
(51) Int. Cl.: G02B 27/48, H04N 9/31, G02F 1/13

(54) **VERFAHREN UND VORRICHTUNG ZUR REDUKTION DER SPECKELBILDUNG AN EINEM PROJEKTIONSSCHIRM**
METHOD AND DEVICE FOR REDUCING THE FORMATION OF SPECKLE ON A PROJECTION SCREEN
PROCEDE ET DISPOSITIF PERMETTANT DE REDUIRE LA FORMATION DE SPECKLE SUR UN ECRAN DE PROJECTION

(30) Priorität: 12.04.1999 DE 19916306; 28.05.1999 DE 19924519
(43) Veröffentlichungstag der Anmeldung: 16.01.2002
(73) Patentinhaber: Deutsche Telekom AG, 53113 Bonn (DE)
(72) Erfinder: DULTZ, Wolfgang, D-65936 Frankfurt am Main (DE); DULTZ, Gisela, D-65936 Frankfurt am Main (DE); BERESNEV, Leonid, Columbia, MD 21044 (US); SCHMITZER, Heidrun, Cincinnati, Ohio 45208 (US)
(86) Internationale Anmeldenummer: EP0002794
(87) Internationale Veröffentlichungsnummer: WO00062114

(56) Entgegenhaltungen:
- WO-A-96/21883
- DE-A- 19 508 754
- DE-A- 19 710 660
- DE-C- 19 501 525
- US-A- 3 941 456
- US-A- 4 647 158
- "PERCEIVED SPECKLE REDUCTION IN PROJECTION DISPLAY SYSTEMS" IBM TECHNICAL DISCLOSURE BULLETIN,US,IBM CORP. NEW YORK, Bd. 40, Nr. 7, 1. Juli 1997 (1997-07-01), Seiten 9-11, XP000728388 ISSN: 0018-8689
- PATENT ABSTRACTS OF JAPAN vol. 2000, no. 03, 30. März 2000 (2000-03-30) & JP 11 337888 A (HITACHI LTD), 10. Dezember 1999 (1999-12-10)
- IWAI T ET AL: "SPECKLE REDUCTION IN COHERENT INFORMATION PROCESSING" PROCEEDINGS OF THE IEEE,US,IEEE. NEW YORK, Bd. 84, Nr. 5, 1. Mai 1996 (1996-05-01), Seiten 765-781, XP000591804 ISSN: 0018-9219 in der Anmeldung erwähnt
- PATENT ABSTRACTS OF JAPAN vol. 005, no. 099 (E-063), 26. Juni 1981 (1981-06-26) & JP 56 043786 A (NIPPON TELEGR & TELEPH CORP), 22. April 1981 (1981-04-22)

## Beschreibung

### Technisches Gebiet:

Die Erfindung betrifft ein Verfahren und eine Vorrichtung zur Reduktion der Speckelsbildung an einem Projektionsschirm.

### Stand der Technik:

Speckel-Muster sind unregelmäßige feinkörnige Lichtverteilungen, die bei der Beleuchtung von weißen Wänden, Projektionsschirmen und anderen Flächen - im folgenden Projektionsschirm - mit aufgeweitetem, kohärentem Licht, insbesondere mit Laserlicht, auftreten. Das Speckle-Muster entsteht bei der Abbildung eines Lichtflecks auf dem Projektionsschirm aufgrund der hohen Kohärenz durch Interferenz der an verschiedenen Punkten des Projektionsschirms gestreuten Lichtwellen. Das Interferenzmuster weist damit die stochastische Feinstruktur des reflektierenden Schirms auf. Die mittlere Größe eines Speckelkorns hängt von der Apertur des kohärent beleuchteten Flecks auf dem Schirm ab. Je größer der Lichtfleck ist, desto feiner ist die Körnigkeit des Speckelmusters. Der Kontrast der Speckelkörner ist durch die Kohärenz der Lichtquelle bestimmt. Das Speckel-Muster verschwindet, wenn die Kohärenzlänge des Lichts merklich unter die mittlere Rauhigkeit des Schirms sinkt.

Zur optischen Wiedergabe von Bildern werden zunehmend auch Projektionsverfahren auf der Basis von Lasern eingesetzt. Im Gegensatz zur Bildwiedergabe mittels Braunscher Röhren oder Flüssigkristallanzeigen hat die Laser-Projektionstechnik den Vorteil, daß sich eine hohe Bildqualität bei nicht begrenzter Bildgröße grundsätzlich realisieren läßt. Dabei wird der Laserstrahl zur Darstellung des wiederzugebenden Bildes ähnlich wie ein Elektronenstrahl in einer Bildröhre über einen Projektionsschirm gerastert.

Bei Projektionsverfahren mit Lasern oder anderen kohärenten Lichtquellen ist die Specklebildung nachteilig. Besonders wenn das Bild aus einzelnen Bildpunkten zeilenweise aufgebaut wird und dazu Laserstrahlen auf den Projektionsbildschirm fokussiert werden, treten Speckel auf. Wegen der kleinen Bildpunkte ist das Speckel-Muster in der Regel grobkörnig und wird vom Betrachter als störendes Glitzern der einzelnen Bildpunkte wahrgenommen.

Zur Unterdrückung der Speckel-Bildung sind verschiedene Ansätze bekannt. Eine Übersicht gibt der Beitrag von Toshiaki Iwai und Toshimitsu Asakura, "Specle Reduction in Coherent Information Processing", Proceedings of the IEEE, Bd. 84, Nr. 5, Mai 1996, S. 765-780. Die geschilderten Verfahren lassen sich untergliedern in Verfahren zur Kontrolle der räumlichen Kohärenz, Kontrolle der zeitlichen Kohärenz, jeweils realisiert durch Manipulation der Lichtquelle, räumliches Abtasten, räumliches Ausmitteln und Speckelreduktion durch digitale Bildverarbeitung.

Beispielsweise ist es bekannt, eine gepulste Laserlichquelle mit geringer Pulslänge zu verwenden, wodurch die Kohärenzlänge des Laserlichts reduziert und die Specklebildung vermindert wird. Hierbei können jedoch nur Lasersysteme verwendet werden, die sich extern oder intern einfach modulieren lassen. Des weiteren kann die räumliche Kohärenz des Laserlichts vermindert werden, indem das Laserlicht eine rotierende Mattglasscheibe passiert oder an ein oder mehreren optischen Diffusern gestreut wird. Es ist auch bekannt, kohärentes Laserlicht in eine Multimode-Lichtleitfaser einzukoppeln und die Faser durch Rotation oder Vibration zu deformieren. Am Ende der Faser tritt das Licht zerlegt in eine Vielzahl von Moden im Ortsraum aus, die alle eine unterschiedliche optische Laufstrecke zurückgelegt haben und damit unterschiedliche Phasenlagen besitzen. Durch Vibration bzw. Rotation der Faser wird die Modenverteilung zeitlich variiert. Damit wird zeitlich und räumlich über das entstehende Phasenmuster gemittelt und eine inkohärente, wenn auch multimodige Lichtquelle bereitgestellt. Nachteilig hieran ist der mechanische Ansatz zur Modendurchmischung, wodurch die Stabilität der Gesamtanordnung beeinträchtigt sein kann.

Zur Reduktion der zeitlichen Kohärenz des Laserlichts ist es bekannt, die Wellenlänge des Laserlichts zu variieren oder mehrere Wellenlängen gleichzeitig zu verwenden. Beispielsweise wurde eine Methode zur Speckle-Reduktion vorgeschlagen, die auf einer durch Modenspringen hervorgerufenen Wellenlängenänderung von Laserdioden basiert. Auch andere Laser, die chaotischen Schwankungen unterliegen, kommen dafür in Frage.

Ein alternativer Ansatz zur Reduktion der Specklebildung ist durch die DE 196 45 976 C1 bekannt geworden. Hierbei wird ein Projektionsschirm verwendet, dessen Projektionstiefe größer als die Kohärenzlänge ist, so daß das reflektierte oder transmittierte Wellenfeld inkohärent wird. Nachteilig daran sind die durch die Oberflächenstruktur des Schirms diffus vergrößerten Bildpunkte sowie die Einschränkung, daß stets ein speziell präparierter Schirm zur Bildwiedergabe verwendet werden muß.

Durch die WO 96 21 883 A ist ein Projektionsschirm bekannt geworden, dessen Oberfläche u.a. zum Zweck der Speckle-Reduktion in solcher Weise unregelmäßig geformt ist, daß das Fourier-Spektrum der Oberfläche höhere Frequenzen aufweist als dasjenige einer auf den Schirm projizierten Pixel-Struktur.

Durch die DE 195 08 754 A1 ist ein Verfahren zum Vermindern von Interferenzen eines kohärenten Lichtbündels bekannt geworden, wobei das Licht senkrecht zur Ausbreitungsrichtung örtlich unterschiedlich polarisiert wird. Hierbei wird der Umstand ausgenutzt, daß unterschiedliche Polarisationszustände des Lichts nicht mehr vollständig miteinander interferieren können. Die erforderlichen Polarisationszustände können z.B. mittels LCD-Matrixen hervorgerufen werden.

Aus der DE 197 10 660 A ist eine Vorrichtung zur Beseitigung von Bildspeckles bei scannender Laserbildprojektion bekannt, wobei der Laserstrahl mit Hilfe einer Ultraschallzelle, in welcher Dichtewellen wandern, durch Beugung an den Dichtewellen in verschiedene Beugungsordnungen unterschiedlicher Frequenz zerlegt wird. Die Teilstrahlen werden mit Hilfe einer Linse überlagert. Auf diese Weise entsteht auf dem Projektionsschirm ein sich bewegendes System von Interferenzmustern, so daß die entstehenden Speckles sich durch den Integrationsprozeß im Auge des Beobachters überlagern und zeitlich und räumlich ausmitteln.

Die US 3 941 456 A offenbart eine Vorrichtung zur Reduktion der Granulation, welche bei der Übertragung optischer Information mittels eines hochgradig kohärenten Lichstrahls auftritt. Der Lichtstrahl durchläuft eine Ultraschallzelle, in der sich je nach Anregung stehende oder wandernde Dichtewellen ausbilden. Die Dichtewellen beeinflussen lokal den Brechungsindex, so daß der Lichstrahl Zonen unterschiedlicher Brechungsindices durchläuft, was eine Reduktion der Granulation bewirkt.

Aus der Veröffentlichung "Perceived Speckle Reduction in Projection Display Systems" in IBM Technical Disclosure Bulkletin, US, IBM Corp. New York, Band 40, Nr. 7, 1. Juli 1997, Seiten 9-11, XP 000728388, ISSN 0018-8689, ist es bekannt, Speckles dadurch zu reduzieren, daß der Lichstrahl einen Flüssigkristall durchläuft, dessen Brechungsindex durch ein elektrisches Feld beeinflußt ist.

Durch die US 4 647 158 A sind ein Verfahren und eine Vorrichtung bekannt geworden, mit welchen ein Strahl von kohärentem Licht mittels eines steuerbaren Beugungsgitters in einen Strahl von inkohärentem Licht umgewandelt wird.

### Technische Aufgabe:

Der Erfindung liegt daher die Aufgabe zugrunde, ein Verfahren und eine Vorrichtung zur Reduktion der Speckelsbildung anzugeben, bei welchem die Nachteile des Standes der Technik vermieden werden.

### Offenbarung der Erfindung:

Diese Aufgabe wird erfindungsgemäß gelöst durch eine Vorrichtung zur Reduktion der Speckelsbildung an einem Projektionsschirm bei Verwendung einer kohärenten Lichtquelle, mit einem elektrisch steuerbaren optischen Element mit räumlich inhomogenem Brechungsindex, der zeitlich variierbar ist, welches zwischen der Lichtquelle und dem Projektionsschirm angeordnet ist, dadurch gekennzeichnet, daß das elektrisch steuerbare optische Element ein Flüssigkristallelement umfaßt, an welches zur Steuerung des zeit- und ortsabhängigen Brechungsindexes ein zeitveränderlicher Spannungsgradient anlegbar ist.

Ein Verfahren zum Betreiben einer derartigen Vorrichtung ist dadurch gekennzeichnet, daß das von der Lichtquelle kommende Licht vor der Projektion auf ein elektrisch steuerbares optisches Element mit räumlich inhomogenem Brechungsindex trifft und dieses durchtritt, wobei der Brechungsindex innerhalb der Projektionsdauer zeitlich variiert wird.

Vorteilhafte Weiterbildungen des Verfahrens und der Vorrichtung sind in den Unteransprüchen gekennzeichnet.

Das Funktionsprinzip der Erfindung ist das folgende: Das von der kohärenten Lichtquelle, insbesondere einem Laser, erzeugte Licht trifft vor der eigentlichen Projektionsvorrichtung, welche das Licht auf den Projektionsschirm lenkt, auf das optische Element, und zwar der einfachsten Ausführung der Erfindung stets unter festem Einfallwinkel. Das optische Element hat die Eigenschaft, das Licht zeitlich variierend abzulenken. Durch den - über die bestrahlte Fläche - räumlich inhomogenen Brechungsindex des optischen Elements wird der einfallende Strahl in eine von der anfänglichen Strahlrichtung verschiedene Richtung abgelenkt. Um bei einem gegebenen Brechungsindexprofil mit maximalen Brechungsindexdifferenzen den gewünschten Effekt zu erzielen, kann der Strahl vor Auftreffen auf das lichtablenktende optische Element aufgeweitet und danach wieder kollimiert werden. Durch zeitliche Varition des Brechungsindexprofils wird diese räumliche Ablenkung des Strahls geändert. Dies führt bereits bei kleinsten Winkeländerungen von unter einem Grad der Strahlrichtung zu einem Ausmitteln der Speckel-Muster auf dem Projektionsschirm, allerdings in der einfachsten Variante der Erfindung auch zu einem geringfügigen Aufweiten des Lichtflecks auf dem Schirm. Damit das Auge lediglich ein gemitteltes Bild wahrnimmt, sollte die zeitliche Variation des Brechungsindex mehrfach innerhalb der Reaktionszeit des Auges erfolgen, d.h. das optische Element mit Schaltfrequenzen von etwa 100 Hz angesteuert werden. Bei gerasterter Projektion eines Bildes, bei der der projizierte Lichtfleck jeweils nur eine bestimmte Dauer auf einem Projektionsort auf dem Schirm verweilt, kann die zeitliche Variation des Brechungsindex mehrfach innerhalb dieser Veweildauer liegen.

In einer vorteilhaften Weiterbildung der Erfindung wird der somit erreichte Effekt der Speckel-Reduktion dadurch verstärkt, daß eine mehrmodige Lichtquelle verwendet wird und/oder das von der Lichtquelle kommende Licht in mehrere räumliche Moden zerlegt wird. Das auf das optische Element treffende Licht besteht somit aus einer Mehrzahl von Moden mit ihrer jeweiligen räumlichen Charakteristik, wie Strahlprofil und Austrittswinkel, die einander überlagert sind. Aufgrund des inhomogenen Brechungsindex werden die einzelnen Moden nunmehr unterschiedlich räumlich abgelenkt, durch die zeitliche Variation des Brechungsindex werden sie räumlich durchmischt. Die Speckel-Muster werden somit ausgemittelt. Es wird dabei vorteilhaft auf eine mechanische Durchmischung durch Vibratoren oder rotierende Elemente im Strahlengang verzichtet wird, jedoch im wesentlichen derselbe Effekt erzielt. Die Brechungsindexunterschiede sollten däbei so gewählt sein, daß keine wesentliche Aufweitung des projizierten Lichtflecks auftritt

Bei gerasterter Abbildung des Lichts auf den Projektionsschirm ist die zeitliche Variation des Brechungsindex des optischen Elements zur Ausmittelung der Speckelmuster so zu wählen, daß die räumlichen Moden innerhalb der Verweildauer eines Abbildungsflecks auf dem Projektionsschirm mehrfach räumlich abgelenkt werden, zumindest aber einmal zwischen zwei Bildern.

Zur Zerlegung des von einer einmodigen Lichtquelle abgestrahlten Lichts wird es vorzugsweise in eine erste Multimode-Lichtleitfaser eingekoppelt. Je nach den Einkoppelbedingungen, ggfs. auch der mechanischen Belastung der Faser, werden andere als die Ursprungsmode angeregt und übertragen, so daß das Licht nach Durchlaufen der Faser aus einer Überlagerung mehrerer räumlicher Moden besteht. Das Licht trifft sodann auf das optische Element. Aufgrund der unterschiedlichen Brechungsindizes werden die einzelnen räumlichen Komponenten je nach Auftreffort in geringfügig verschiedene Richtungen abgelenkt.

Vorteilhaft schließt sich an das optische Element eine weitere Lichtleitfaser an, deren Licht zur Projektion verwendet wird. Durch das Einkoppeln des Lichts in diese Faser wird erreicht, daß das Licht in definierter Weiser der eigentlichen Projektionseinrichtung zugeführt werden kann. Ein "Verschmieren" des Lichtflecks auf dem Projektionsdisplay wird dadurch vermieden, während der Effekt der Ausmittelung der Speckel erhalten bleibt.

Vorzugsweise ist diese dem optischen Element nachgeschaltete Faser eine Multimode-Faser, die gegebenenfalls zu der ersten, dem optischen Element vorgeschalteten Faser hinzutritt. Durch die Variation der Ablenkrichtungen mittels des optischen Elements werden in diesem Fall der zweiten Multimode-Faser jeweils unterschiedliche Moden angeregt und übertragen. Somit ermöglicht die zweite Faser eine weitere Durchmischung und Ausmittelung der Kohärenzeffekte.

Als optisches Element wird vorteilhaft ein Flüssigkristallelement eingesetzt. Flüssigkristalle sind halbflüssige Lösungen oder Gemische großer Moleküle, die sich in der Flüssigkeit aneinander ausrichten, wodurch eine Flüssigkristallschicht doppelbrechend wird. Die Doppelbrechung ist durch ein von außen angelegten elekrisches Feld beeinflußbar. Dabei tritt sowohl eine spannungsproportionale Änderung als auch eine nichtlineare stufenförmige Änderung bei einer Schwellspannung auf. Flüssigkristalle können aufgrund dieser elektrooptischen Eigenschaften zur Steuerung der Phase einer durch sie hindurchtretenden Lichtwelle verwendet werden. Zur Umsetzung der Erfindung wird beispielsweise ein Flüssigkristallelement eingesetzt, an welches zur Erzeugung einer räumlich inhomogenen Brechungsindexverteilung eine ortsveränderliche Spannung angelegt ist, beispielsweise ein Spannungsgradient. Bei Elementen mit spannungsproportionaler Doppelbrechung ändert sich die Doppelbrechung entsprechend. Ein so erzeugter Doppelbrechungsgradient wirkt für eine Polarisationsrichtung wie ein Brechungsindexgradient, der einen Lichtstrahl dieser Polarisation ablenkt. Bei den kleinen im Arbeitsbereich erzeugbaren Brechungsindexgradienten und geringen Schichtdicken bekannter Flüssigkristallzellen ist die räumliche Ablenkung gering, doch zur Modenvermischung im Sinne der Erfindung ausreichend. Der Effekt kann wie oben beschrieben durch Hinterschalten einer Multimode-Faser verstärkt werden.

Eine besonders vorteilhafte Weiterentwicklung ist eine Vorrichtung mit einem optischen Element, welches beim Anlegen einer Spannung isotrop bleibt, d.h. zwar den Aufbau eines räumlich variierenden Brechungsindexes erlaubt, dabei aber nicht doppelbrechend ist. Die doppelbrechenden Eigenschaften einfacher Flüssigkristallelemente mit einer einzigen Flüssigkristallzelle (Teilelement) führen beim Durchtritt des Elements zu einer Änderung der Polarisation. Für die meisten Anwendungen ist jedoch eine polarisationsunabhängige Handhabbarkeit vorteilhaft und wünschenswert.

Flüssigkristallelemente, die beim Anlegen einer Spannung isotrop bleiben, sind durch die nicht vorveröffentlichte deutsche Patentanmeldung 198 52 890.6 vorgeschlagen worden. Sie bestehen aus zwei oder mehreren Flüssigkristallschichten als Teilelemente, insbesondere aus helikalen, smektischen ferroelektrischen Flüssigkristallen, die so relativ zueinander ausgerichtet sind, daß ihre Doppelbrechung für alle angelegten Spannungen kompensiert wird. Beispielsweise werden zwei Schichten zueinander orthogonal ausgerichtet, so daß die langsame Achse der ersten Schicht senkrecht zur schnellen Achse der zweiten Schicht und die schnelle Achse der ersten Schicht senkrecht zur langsamen Achse der zweiten Schicht gerichtet ist. Eine isotrope Brechung der gesamten Schichtenfolge bleibt bestehen; die Polarisation transmittierten Lichts bleibt erhalten.

Erfindungsgemäß werden die in der DE 198 52 890.6 beschriebenen optischen Elemente in der Weise weiterentwickelt, daß statt einer konstanten Spannung ein Spannungsgradient über die Fläche der Zellen erzeugt wird. An den unterschiedlichen Zellen des optischen Elements-ist die ortsabhängige Spannung so zu wählen, daß die Polarisation des Lichts unabhängig vom Durchtrittsort vor und nach dem optischen Element gleich ist. Besonders vorteilhaft ist die Verwendung eines optischen Elements aus zwei derartigen Flüssigkristallschichten, wobei die langsame Achse der ersten Schicht senkrecht zur schnellen Achse der zweiten Schicht und die schnelle Achse der ersten Schicht senkrecht zur langsamen Achse der zweiten Schicht gerichtet ist. An beide Schichten wird ein Spannungsgradient angelegt, so daß die Spannung an einem Ort senkrecht zur Strahlrichtung für beide Schichten etwa die gleiche ist. Ein Spannungsgradient in einer Raumrichtung ist grundsätzlich ausreichend. Vorteilhaft ist jedoch, wenn der Spannungsgradient abwechselnd in x- und in y-Richtung angelegt wird. Alternativ kann ein Drehfeld an die Flüssigkristallschichten angelegt werden.

Zur Ausmittelung der Speckel-Muster ist eine Änderung der ortsabhängigen Brechungsindizes durch Umschalten der angelegten Spannung notwendig, die mehrfach innerhalb der Reaktionszeit des Auges erfolgt. Bei Projektionssystemen auf Laserbasis wird das Bild in der Regel durch Abrastern punktweise erzeugt. In diesem Fall muß der Abbildungsfleck eine Zeitdauer t1 auf dem Projektionsschirm verweilen, die größer als die Zeitdauer t2 der Brechungsindexänderung ist, vorzugsweise wenigstens das fünffache von t2 beträgt.

Bei Displays mit beispielsweise 1000 mal 1000 Bildpunkten und 100 Einzelbildern pro Sekunde würde die notwendige Schaltzeit für die Flüssigkristallzelle demnach etwa 0,5 GHz betragen. Solche hohen Schaltfrequenzen können derzeit zwar mit elektrooptischen Kristallen, nicht aber mit Flüssigkristallzellen erreicht werden. Um auch bei derartigen hochauflösenden System die Abbildungsqualität durch Reduktion der Speckelsbildung zu verbessern, werden vorteilhaft Projektionssysteme eingesetzt, die nicht nur einen Laser, sondern ein ganzes Laserareal, z.B. Spalten mit mehreren Lasern, verwenden. Mit einem solchen System kann eine größere Anzahl von Zeilen des Bildes gleichzeitig aufgebaut und projiziert werden. Dadurch verringert sich die Zeitdauer t1 und demnach auch die notwendige Schaltzeit t2, wenn jeder einzelne Projektionslaser im Sinne der Erfindung mit einem optischen Element, insbesondere einem Flüssigkristallelement, versehen wird. Werden im obigen Beispiel 100 Laser gleichzeitig zur Projektion genutzt, so werden Schaltfrequenzen von etwa 5 MHz benötigt, die bereits im Bereich der modernen Flüssigkristallentwicklung liegen.

In vielen Fällen kann jedoch auch eine in der Größenordnung der Bildfrequenz des Projektionssystems liegende Schaltfrequenz eine genügende Speckelunterdrückung bewirken.

Kurzbeschreibung der Zeichnung, in der zeigen:
- Figur 1: ein Laser-Projektionssystem mit einer Vorrichtung zur Reduktion der Speckelbildung
- Figuren 2, 3: ein zur Herstellung eines Brechungsindexgradienten schaltbares Flüssigkristallelement

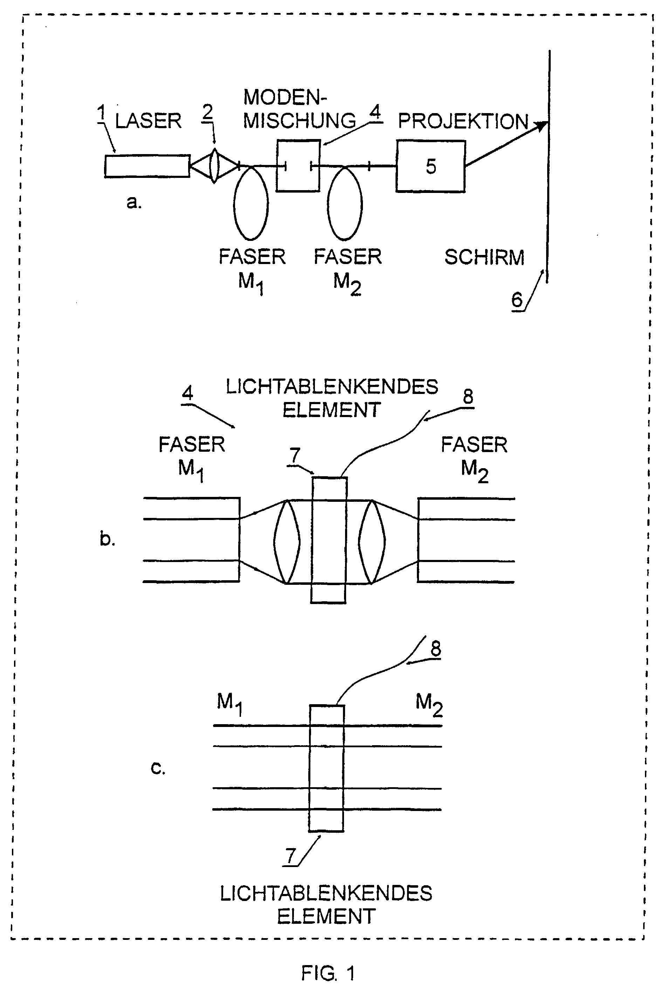

Figur 1a zeigt ein Laser-Projektionssystem mit einer Vorrichtung zur Reduktion der Speckelbildung durch Modenmischung. Das Projektionssystem umfaßt einen Laser 1 als Lichtquelle. Bei Farbdisplays werden mehrere Laser unterschiedlicher Wellenlänge eingesetzt. Das Laserlicht wird mittels einer optischen Anordnung 2, hier schematisch als Linse dargestellt, in eine erste Multimode-Lichtleitfaser M1 eingekoppelt, deren Ausgang auf den Eingang einer zweiten Multimode-Lichtleitfaser M2 abgebildet wird, vgl. Figur 1b. Am Ausgang der zweiten Multimode-Lichtleitfaser M2 befindet sich die eigentliche Projektionseinheit 5, mittels derer der Laserstrahl Punkt für Punkt auf den Projektionsschirm 6 projiziert wird.

Die Einheit zur Modenmischung 4 ist in Figur 1b schematisch dargestellt. Aus der ersten Multimode-Faser M1 austretendes Licht besteht bereits aus einer Überlagerung mehrerer Moden. Es trifft auf ein optischen Element 7 mit räumlich inhomogenem, elektrisch veränderbarem Brechungsindex. Die Ansteuerung des Elements 7 auf elektrischem Weg ist schematisch durch eine Signalleitung 8 angedeutet. Das optische Element 7 ist imstande, auftreffendes und transmittiertes Licht ortsabhängig abzulenken. Damit ändert sich das Bild des eingekoppelten Lichts am Ausgang des Elements 7 bzw. am Eingang der zweiten Faser M2. Die einzelnen Moden aus der Faser M1 koppeln örtlich verändert an verschiedenen Stellen und unter verschiedenen Winkeln in die zweite Multimode-Faser M2 ein und regen damit in M2 eine andere Mode als ursprünglich an. Diese erscheint am Ausgang von M2 und damit auf dem Projektionsschirm 6 ebenfalls an einer geringfügig anderen Stelle. Werden die lichtablenkenden Eigenschaften des optischen Elements 7 schnell innerhalb der Reaktionszeit des Auges geändert, so laufen die einzelnen Moden auf dem Projektionsschirm 6 durcheinander. Da jede Mode eine andere Phasenverzögerung aufweist, werden die Speckelmuster auf dem Projektionsschirm ausgemittelt und verschwimmen. Dabei verweilt der Abbildungsfleck eine Zeitdauer t1 auf dem Projektionsschirm, die größer als die Zeitdauer t2 der Brechungsindexänderung ist, vorzugsweise wenigstens das fünffache von t2 beträgt.

Eine Speckelmittlung zwischen verschiedenen Einzelbildern erfordert nur mehrfache Brechungsindexänderungen innerhalb der Reaktionszeit des Auges. Etwa 1000 Hz genügen hierfür.

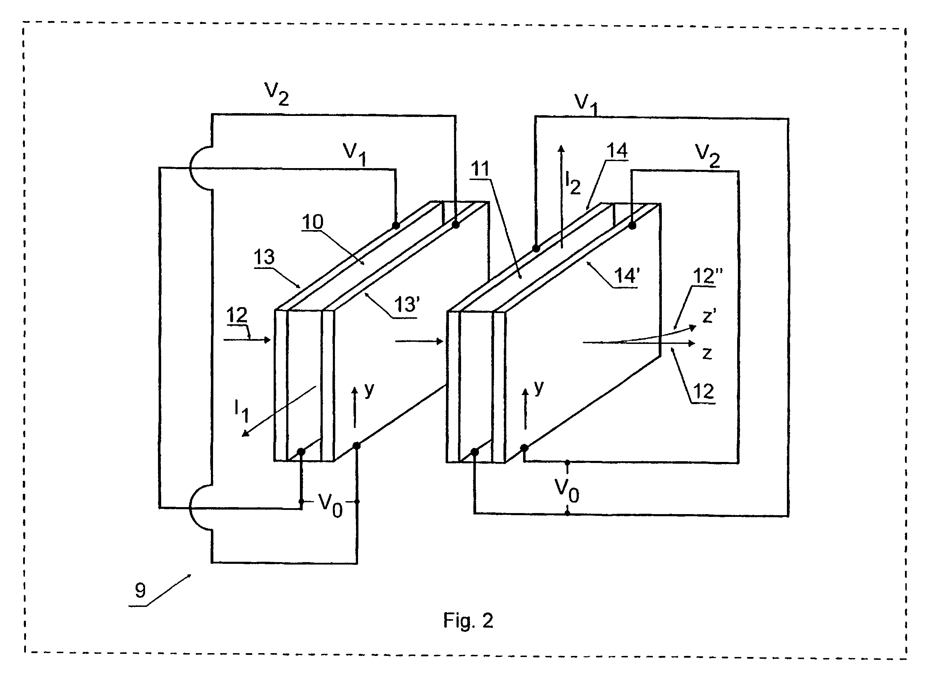

Figur 2 zeigt ein zur Herstellung eines Brechungsindexgradienten schaltbares Flüssigkristallelement 9 mit kompensierbarer Doppelbrechung. Das Flüssigkristallelement 9 besteht aus zwei Zellen mit jeweils einer Flüssigkristallschicht 10, 11, welche zwischen jeweils zwei transparenten Elektroden 13, 13' bzw. 14, 14' angeordnet ist. Innerhalb der Schichten richten sich die Moleküle aus, wobei die elektrooptischen Eigenschaften durch die zwischen den jeweiligen Elektroden angelegte Spannung beeinflußbar sind. Die Orientierungen der Indikatrices der beiden Flüssigkristallschichten 10, 11 werden durch die Vektoren I1 und I2 beschrieben. Diese sind senkrecht zueinander und zur Strahlrichtung des einfallenden Lichtstrahls 12 ausgerichtet. Erfindungsgemäß wird an beide Zellen ein Spannungsgradient senkrecht zur Strahlrichtung, hier in y-Richtung, angelegt. Der räumliche Spannungsverlauf ist dabei derart gewählt, daß die Spannung V(y) am Ort y für beide Zellen die gleiche ist. Damit bleibt die orthogonale Ausrichtung der Indikatices für jeden y-Wert erhalten, somit bleibt das Schichtenpaktet 10, 11 isotrop. Durch geeignete Wahl des Widerstands der Elektroden wird der Strom in den Elektroden gering gehalten.

Um die mittlere Zellenspannung einzustellen, wird eine Spannung V0 am Ort y=y0 an beide Zellen angelegt. Durch Anlegen des Spannungsgradienten wird der senkrecht auf die Zellen einfallende Lichtstrahl 12 geringfügig in y-Richtung abgelenkt, schematisch Ausgangsrichtungen 12' bzw. nach Umschalten 12". Diese Ablenkung dient zur Modenvermischung zwischen zwei mehrmodigen Glasfasern, z.B. gemäß Figur 1, und damit zur erfindungsgemäßen Unterdrückung der Ausbildung von Speckel-Mustern.

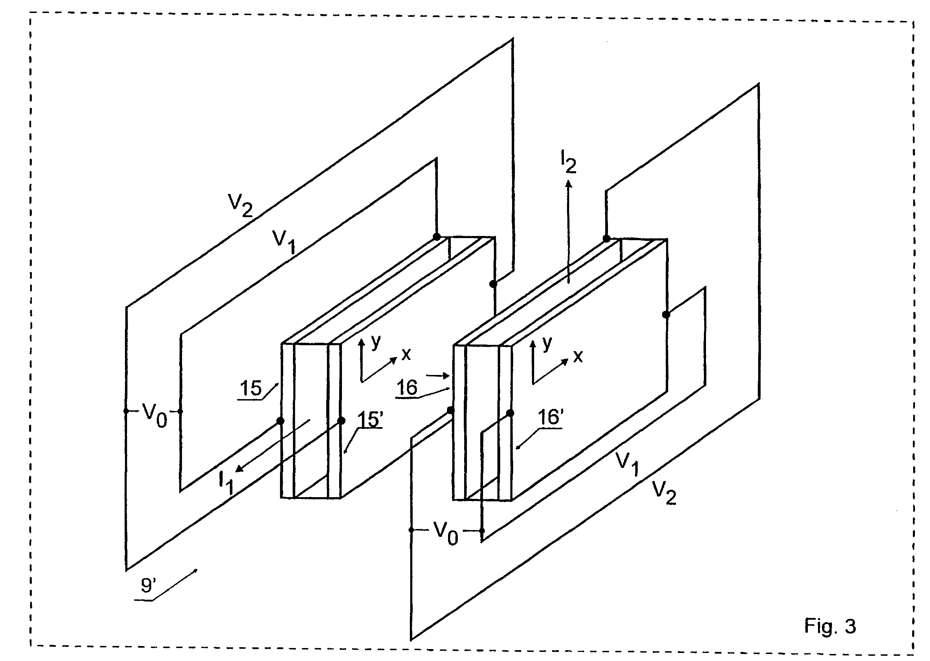

Eine Verbesserung der Speckel-Reduktion durch verstärkte Modendurchmischung wird mit Flüssigkristallelementen mit einem komplexeren Ablenkungsverhalten erreicht. Ein Beispiel für ein derartiges Flüssigkristallelement 9' ist in Figur 3 dargestellt. Sein Aufbau aus zwei Flüssigkristallschichten 10, 11 entspricht im wesentlichen der Figur 2. Im Unterschied zum Flüssigkristallelement aus Figur 2 sind hier zusätzlich Elektroden 15, 15' bzw. 16, 16' vorgesehen, mit welchen gleichzeitig oder alternativ zum Spannungsgradienten in y-Richtung ein Spannungsgradient senkrecht dazu in x-Richtung an die jeweilige Zelle anlegbar ist. Vorzugsweise wird die Richtung schnell gewechselt. Dadurch ist die Richtung des Spannungsgradienten und damit die Ablenkrichtung des einfallenden Lichts zur Modendurchmischung veränderbar. Abgleichbedingung für die Kompensation der Doppelbrechung der einzelnen Zelle ist hier die Übereinstimmung der Spannungen in den einzelnen Zellen an jedem durchstrahlten Ort (x, y).

### Gewerbliche Anwendbarkeit:

Die Erfindung läßt sich zur Verbesserung der Abbildungsqualität von Laser-Projektionssystemen durch Unterdrückung von Speckle-Mustern vorteilhaft gewerblich einsetzen.

## Patentansprüche

1. Vorrichtung zur Reduktion der Speckelsbildung an einem Projektionsschirm (6) bei Verwendung einer kohärenten Lichtquelle (1), mit einem elektrisch steuerbaren optischen Element (4, 7) mit räumlich inhomogenem Brechungsindex, der zeitlich variierbar ist, welches zwischen der Lichtquelle (1) und dem Projektionsschirm (6) angeordnet ist, **dadurch gekennzeichnet, daß** das elektrisch steuerbare optische Element (4, 7) ein Flüssigkristallelement umfaßt, an welches zur Steuerung des zeit- und ortsabhängigen Brechungsindexes ein zeitveränderlicher Spannungsgradient angelegt wird.

2. Vorrichtung nach Anspruch 1, **dadurch gekennzeichnet,**
**daß** das Flüssigkristallelement wenigstens zwei hintereinander im Strahlengang angeordnete Flüssigkristallschichten (10, 11) aufweist, deren jeweils schnelle und langsame optische Achse parallel zu der jeweiligen Schicht liegt und die langsamen bzw. schnellen Achsen derart gegeneinander verdreht sind, daß die Polarisation des Lichts vor und hinter dem Flüssigkristallelement gleich ist.

3. Vorrichtung nach Anspruch 2, **dadurch gekennzeichnet,**
**daß** die langsame Achse der ersten Schicht (10) senkrecht zur schnellen Achse der zweiten Schicht (11) und die schnelle Achse der ersten Schicht (10) senkrecht zur langsamen Achse der zweiten Schicht (11) gerichtet ist.

4. Vorrichtung nach einem der Ansprüche 1 bis 3, **dadurch gekennzeichnet,**
**daß** zum Auftrennen des von der Lichtquelle (1) kommenden Lichts in mehrere räumliche Moden eine erste Multimode-Lichtleitfaser (M1) vorgesehen ist, welche dem optischen Element (4, 7) vorgeschaltet ist.

5. Vorrichtung nach einem der Ansprüche 1 bis 4, **dadurch gekennzeichnet,**
**daß** am Ausgang des elektrisch steuerbaren optischen Elements (4, 7) eine zweite Multimode-Lichtleitfaser (M2) angeordnet ist.

6. Vorrichtung nach Anspruch 4, **dadurch gekennzeichnet,**
**daß** nach einer ersten Multimode-Lichtleitfaser (M1) ein elektrisch steuerbares lichtablenkendes Element (4, 7) angeordnet ist, welches die einzelnen Moden der ersten Multimode-Lichtleitfaser (M1) je nach Steuerspannung unterschiedlich ablenkt.

7. Vorrichtung nach Anspruch 6, **dadurch gekennzeichnet,**
**daß** eine zweite Multimode-Lichtleitfaser (M2) vorhanden ist, welche nach dem elektrisch steuerbaren lichtablenkenden Element (4, 7) angeordnet ist, wobei die einzelnen Moden der ersten Multimode-Lichtleitfaser (M1) je nach Steuerspannung unterschiedlich in die zweite Multimode-Lichtleitfaser (M2) eingekoppelt werden.

8. Vorrichtung nach Anspruch 6 oder 7, **dadurch gekennzeichnet,**
**daß** das lichtablenkende Element (4, 7) ein Flüssigkristallelement ist, an welches ein Spannungsgradient angelegt ist, bei welchem die Abhängigkeit von der Polarisationsrichtung des Lichts durch Kompensation in mindestens zwei Teilelementen (10, 11) aufgehoben ist, vorzugsweise indem die schnellen bzw. langsamen Achsen der Teilelemente (10, 11) senkrecht aufeinander stehen.

9. Vorrichtung nach Anspruch 8, **dadurch gekennzeichnet,**
**daß** an die Teilelemente (10, 11) je ein elektrisches Drehfeld angelegt wird, so daß der Spannungsgradient und damit die Ablenkrichtung im Raum welchselnde Richtungen einnimmt.

10. Verfahren zum Betreiben einer Vorrichtung nach Anspruch 1, **dadurch gekennzeichnet,**
**daß** das von der Lichtquelle (1) kommende Licht vor der Projektion auf ein elektrisch steuerbares optisches Element (4, 7) mit räumlich inhomogenem Brechungsindex trifft und dieses durchtritt, wobei der Brechungsindex innerhalb der Projektionsdauer zeitlich variiert wird.

11. Verfahren nach Anspruch 10, **dadurch gekennzeichnet,**
**daß** eine mehrmodige Lichtquelle verwendet wird.

12. Verfahren nach Anspruch 10, **dadurch gekennzeichnet,**
**daß** das von der Lichtquelle kommende Licht vor dem Auftreffen auf das optische Element (4, 7) in mehrere räumliche Moden aufgetrennt wird, welche sich überlagern, vorzugsweise indem das Licht in eine erste Multimode-Faser (M1) eingekoppelt wird und diese durchläuft.

13. Verfahren nach einem der Ansprüche 10 bis 12, **dadurch gekennzeichnet,**
**daß** bei gerasterter Abbildung des Lichts auf den Projektionsschirm (6) der Brechungsindex bzw. das Brechungsindexprofil des optischen Elements (4, 7) innerhalb der Verweildauer eines Abbildungsflecks auf dem Projektionsschirm (6) mehrfach geändert wird.

14. Verfahren nach einem der Ansprüche 10 bis 13, **dadurch gekennzeichnet,**
**daß** das Licht nach Durchlaufen des optischen Elements (4, 7) in eine Lichtleitfaser, insbesondere eine zweite Multimode-Faser (M2), eingekoppelt wird.

## Claims

1. Device for reducing speckles on a projection screen (6) using a coherent light source (1), with an electrically controllable optical element (4, 7) with spatially inhomogeneous, time-variable refractive index disposed between the light source (1) and the projection screen (6), **characterized in that**
the electrically controllable optical element (4, 7) comprises a liquid-crystal element to which a time-variable voltage gradient is applied for controlling the time- and position-dependent refractive index.

2. Device according to claim 1, **characterized in that**
the liquid-crystal element has at least two liquid-crystal layers (10, 11) disposed one behind the other in the optical path, the fast and slow optical axes of each of which are situated parallel to the respective layer, the slow and fast axes being rotated with respect to each other in such a manner that the polarization of the light before and after the liquid-crystal element is identical.

3. Device according to claim 2, **characterized in that**
the slow axis of the first layer (10) is directed perpendicularly to the fast axis of the second layer (11) and the fast axis of the first layer (10) is directed perpendicularly to the slow axis of the second layer (11).

4. Device according to any one of claims 1 to 3, **characterized in that**
provided for splitting the light coming from the light source (1) into a plurality of spatial modes is a first multimode light-conducting fibre (M1) which is positioned before the optical element (4, 7).

5. Device according to any one of claims 1 to 4, **characterized in that**
a second multimode light-conducting fibre (M2) is disposed at the output of the electrically controllable optical element (4, 7).

6. Device according to claim 4, **characterized in that**
disposed after a first multimode light-conducting fibre (M1) is an electrically controllable light-deflecting element (4, 7) which deflects the individual modes of the first multimode light-conducting fibre (M1) differently depending on the control voltage.

7. Device according to claim 6, **characterized in that**
a second multimode light-conducting fibre (M2) is provided which is disposed after the electrically controllable light-deflecting element (4, 7), the individual modes of the first multimode light-conducting fibre (M1) being coupled differently into the second multimode light-conducting fibre (M2) depending on the control voltage.

8. Device according to claim 6 or 7, **characterized in that**
the light-deflecting element (4, 7) is a liquid-crystal element to which a voltage gradient is applied in which the dependence on the polarization direction of the light is cancelled out by compensation in at least two subelements (10, 11), preferably **in that** the fast and slow axes of the subelements (10, 11) are perpendicular to each other.

9. Device according to claim 8, **characterized in that**
an electric rotating field is applied to each of the subelements (10, 11), with the result that the voltage gradient and thus the spatial deflection direction assume alternating directions.

10. Method for operating a device according to claim 1, **characterized in that**
before projection, the light coming from the light source (1) strikes an electrically controllable optical element (4, 7) with spatially inhomogeneous refractive index and passes through the latter, the refractive index being varied with respect to time within the projection period.

11. Method according to claim 10, **characterized in that**
a multimode light source is used.

12. Method according to claim 10, **characterized in that**
before striking the optical element (4, 7), the light coming from the light source is split into a plurality of spatial modes which overlap, preferably **in that** the light is coupled into a first multimode fibre (M1) and passes through the latter.

13. Method according to any one of claims 10 to 12, **characterized in that**
in the case of rastered imaging of the light onto the projection screen (6), the refractive index or refractive-index profile of the optical element (4, 7) is changed a plurality of times within the dwell time of an imaging spot on the projection screen (6).

14. Method according to any one of claims 10 to 13, **characterized in that**
after passing through the optical element (4, 7), the light is coupled into a light-conducting fibre, particularly a second multimode fibre (M2).

## Revendications

1. Dispositif destiné à la réduction des speckels sur un écran de projection (6) lors de l'utilisation d'une source lumineuse cohérente (1) comprenant un élément optique (4, 7) commandé électriquement à indice de diffraction spatialement inhomogène, temporisé et implanté entre la source lumineuse (1) et l'écran de projection (6), **caractérisé en ce que** l'élément optique (4, 7) commandé électriquement comprend un élément à cristaux liquides contre lequel est appliqué un gradient de tension variable dans le temps pour la commande de l'indice de diffraction lui-même fonction du temps et du lieu.

2. Dispositif selon la revendication 1, **caractérisé en ce que** l'élément à cristaux liquides présente au moins deux couches de cristaux liquides (10, 11) implantées successivement dans la trajectoire du rayon dont chaque axe optique rapide et lent est agencé parallèlement à la couche considérée et les axes lents ou rapides sont décalés en rotation l'un par rapport à l'autre de telle sorte que la polarisation de la lumière est égale en amont et en aval de l'élément à cristaux liquides.

3. Dispositif selon la revendication 2, **caractérisé en ce que** l'axe lent de la première couche (10) est orienté verticalement par rapport à l'axe rapide de la deuxième couche (11) et que l'axe rapide de la première couche (10) est orienté verticalement par rapport à l'axe lent de la deuxième couche (11).

4. Dispositif selon l'une des revendications 1 à 3, **caractérisé en ce qu'**est prévue, pour la séparation de la lumière provenant de la source lumineuse (1) en plusieurs modes spatiaux, une première fibre optique multimode (M1) placée en amont de l'élément optique (4, 7).

5. Dispositif selon l'une des revendications 1 à 4, **caractérisé en ce qu'**est prévue, à la sortie électrique de l'élément optique (4, 7) commandé électriquement, une seconde fibre optique multimode (M2).

6. Dispositif selon la revendication 4, **caractérisé en ce qu'**est implanté, en aval de la première fibre optique (M1), un élément de déviation de la lumière commandé électriquement (4, 7) qui dévie les différents modes de la première fibre optique (M1) de manière différente selon la tension de commande.

7. Dispositif selon la revendication 6, **caractérisé en ce qu'**existe une deuxième fibre optique multimode (M2) implantée en aval de l'élément de déviation de la lumière commandé électriquement (4, 7), les différents modes de la première fibre optique multimode (M1) étant injectés différemment dans la deuxième fibre optique (M2) en fonction de la tension de commande.

8. Dispositif selon la revendication 6 ou 7, **caractérisé en ce que** l'élément de déviation de la lumière commandé électriquement (4, 7) est un élément à cristaux liquides auquel est appliqué un gradient de tension pour lequel la dépendance du sens de la polarisation de la lumière est supprimée par compensation dans au moins deux éléments partiels (10, 11) de préférence par le fait que les axes rapides ou lents des éléments partiels (10, 11) sont superposés verticalement.

9. Dispositif selon la revendication 8, **caractérisé en ce qu'**un champ électrique rotatif est appliqué sur chacun des éléments partiels (10, 11) de telle sorte que le gradient de tension et donc le sens de déviation prenne des orientations différentes dans l'espace.

10. Procédé d'exploitation d'un dispositif selon la revendication 1, **caractérisé en ce que** la lumière provenant de la source lumineuse (1) arrive avant la projection sur un élément optique (4, 7) commandé électriquement à indice de diffraction spatialement inhomogène qu'elle traverse, l'indice de diffraction étant varié dans le temps pendant la durée de la projection.

11. Procédé selon la revendication 10, **caractérisé en ce qu'**est utilisée une source lumineuse multimodes.

12. Procédé selon la revendication 10, **caractérisé en ce qu'**avant d'arriver sur l'élément optique (4,7), la lumière provenant de la source lumineuse est séparée en plusieurs modes spatiaux se chevauchant de préférence de manière telle que la lumière est injectée dans une première fibre multimode (M1) et qu'elle traverse ladite première fibre multimode.

13. Procédé selon l'une quelconque des revendications 10 à 12, **caractérisé en ce que** lors de la reproduction tramée de la lumière sur l'écran de projection (6), l'indice de diffraction ou le profil de l'indice de diffraction de l'élément optique (4,7) est modifié à plusieurs reprises au cours de la durée de présence du speckel sur l'écran de projection (6).

14. Procédé selon l'une quelconque des revendications 10 à 13, **caractérisé en ce que** la lumière, après avoir traversé l'élément optique (4,7) est injectée dans une fibre optique, en particulier une seconde fibre multimode (M2).
